# EUROPÄISCHE PATENTANMELDUNG

(11) **EP 4 596 198 A1**
(43) Veröffentlichungstag der Anmeldung: **06.08.2025**
(21) Anmeldenummer: 24155534.1
(22) Anmeldetag: 02.02.2024
(51) Int. Cl.: B27G 13/08

(54) **FRÄSKÖRPER**

(71) Anmelder: Schönborn, Damian, 2013 Göllersdorf (AT)
(72) Erfinder: Schönborn, Damian, 2013 Göllersdorf (AT)
(74) Vertreter: SONN Patentanwälte GmbH & Co KG

(57) **Zusammenfassung**

Fräskörper (1) zum Fräsen von Holz, mit einem Drehkörper (2), welchem eine Drehachse (3) zugeordnet ist und welcher eine um die Drehachse (3) verlaufende Mantelfläche (5) aufweist, wobei auf der Mantelfläche (5) eine um die Drehachse (3) verlaufende Sägekette (6) angeordnet ist, die eine Vielzahl von Kettengliedern (7) mit Sägezähnen (8) aufweist, wobei die Mantelfläche (5) eine Führungsvorrichtung (9) aufweist, über welche die Sägekette (6) auf der Mantelfläche (5) geführt ist.

## Beschreibung

Die Erfindung betrifft einen Fräskörper zum Fräsen von Holz, mit einem Drehkörper, welchem eine Drehachse zugeordnet ist und welcher eine um die Drehachse verlaufende Mantelfläche aufweist.

Durch einen Motor angetriebene Fräsen zum Fräsen von Holz, beispielsweise zum Abtrennen von Ästen eines Baumstamms, sind bekannt.

Die DE 38 18 174 C2 offenbart eine Astfräse mit einer Tragstange, welche an einem Ende einen Antriebsmotor und einen damit gekoppelten Fräskörper zum Abtrennen der Äste aufweist. Der Fräskörper weist einen geringen Durchmesser auf, um beim Schnitt durch die Äste nur ein geringes Widerstandsmoment hervorzurufen. Die Druckschrift offenbart jedoch keine Details zum Aufbau des Fräskörpers.

Nachteilig an bekannten Fräskörpern zum Fräsen von Holz, beispielsweise von Ästen ist, dass diese mit einer grob strukturierten Fräsoberfläche ein unsauberes Schnittbild und einen großen Widerstand beim Eingriff in ein Stück Holz, wie einen Ast, verursachen können, während mit einer fein strukturierten Fräsoberfläche der Zeitaufwand für die Entfernung größerer Holzmengen, wie beim Entfernen eines Astes, auf ein unerwünschtes Maß erhöht wird. Ein weiterer Nachteil bekannter Fräskörper ist, dass diese Messer aufweisen, welche in aufwändigen und schweren (Stahl)Trägern aufgenommen werden müssen, wodurch der Fräskörper insgesamt hohes Gewicht aufweist. Die Messer sind kostenintensiv in der Anschaffung und erhöhen den Wartungsaufwand. Andere bekannte Fräskörper müssen nach einer entsprechenden Einsatzdauer verschleißbedingt ausgetauscht werden.

Es ist nun Aufgabe der Erfindung einen Fräskörper wie eingangs angegeben zu schaffen, welcher die Nachteile des Standes der Technik vermeidet oder zumindest verringert. Insbesondere soll der Fräskörper ein Fräsen eines Stücks Holz, beispielsweise von Aststummeln, auf effiziente Weise ermöglichen. Zudem soll der Fräskörper einfach, kostengünstig und robust aufgebaut sein. Weiters soll der Fräskörper langlebig ausgebildet sein.

Diese Aufgabe wird durch einen Fräskörper gemäß Anspruch 1 gelöst. Vorteilhafte Ausführungen und Weiterbildungen sind in den abhängigen Ansprüchen angegeben.

Die Erfindung ist dadurch gekennzeichnet, dass auf der Mantelfläche eine um die Drehachse verlaufende Sägekette angeordnet ist, die eine Vielzahl von Kettengliedern mit Sägezähnen aufweist, wobei die Mantelfläche eine Führungsvorrichtung aufweist, über welche die Sägekette auf der Mantelfläche geführt ist. Der Fräskörper ist somit zum Fräsen von Holz vorgesehen. Beispielsweise kann mit dem Fräskörper ein Baum durch Fräsen bearbeitet werden. Insbesondere kann der Fräskörper zum möglichst vollständigen Abfräsen von Aststummeln eines Baumstamms vorgesehen sein. Der Fräskörper weist hierfür einen Drehkörper auf, welchem eine Drehachse zugeordnet ist. Zum Fräsen von Holz wird der Fräskörper und somit auch der Drehkörper in Rotation versetzt. Der Drehkörper kann hierfür eine Drehwelle aufweisen oder mit zumindest einer Drehwelle verbunden sein oder eine Aufnahme, beispielsweise eine Vertiefung oder eine Durchgangsöffnung aufweisen, in welche eine Drehwelle einsetzbar ist. Die Drehwelle fällt im Allgemeinen mit der Drehachse zusammen. Der Drehkörper weist zudem eine um die Drehachse verlaufende Mantelfläche auf. Die Mantelfläche ist im Allgemeinen rotationssymmetrisch um die Drehachse ausgebildet. Um nun mit dem Fräskörper einen effizienten Fräsvorgang durchführen zu können und den Fräskörper langlebig auszubilden, ist auf der Mantelfläche eine um die Drehachse verlaufende Sägekette angeordnet, die eine Vielzahl von Kettengliedern mit Sägezähnen aufweist. Die Sägekette ist derart auf der Mantelfläche angeordnet, dass die Sägezähne von der Mantelfläche abstehen. Insbesondere können die Sägezähne in einem rechten Winkel zur Drehachse von der Mantelfläche abstehen. Als Sägekette des Fräskörpers kann beispielsweise eine für im Handel erhältliche Kettensägen konstruierte Sägekette verwendet werden. Um verbrauchte Sägeketten austauschen zu können oder stumpfe Sägeketten nachschleifen zu können, ist die Sägekette bevorzugt abnehmbar auf der Mantelfläche angeordnet. Somit muss nach einer Vielzahl von Fräsvorgängen, insbesondere im Falle beschädigter oder stumpfer Sägezähne, nicht der gesamte Fräskörper ausgetauscht werden. Weiters weist die Mantelfläche eine Führungsvorrichtung auf, über welche die Sägekette auf der Mantelfläche geführt ist. Die Führungsvorrichtung kann ausgebildet sein, die Sägekette in Bezug auf die Mantelfläche in einer vorgegebenen, im Wesentlichen starren Position zu fixieren. Hierfür kann die Führungsvorrichtung beispielsweise eine Klemmvorrichtung aufweisen. Die Führungsvorrichtung kann weiters ausgebildet sein, der Sägekette in Bezug auf die Mantelfläche einen Freiheitsgrad für eine Bewegung relativ zur Mantelfläche bereitzustellen. Der Freiheitsgrad verläuft bevorzugt in Richtung der Längserstreckung der Sägekette. Hierfür kann die Führungsvorrichtung beispielsweise eine Gleitvorrichtung aufweisen, in welcher die Sägekette verstellbar aufgenommen ist. Die in eine bevorzugte Position gebrachte Sägekette kann daraufhin in dieser Position lösbar oder dauerhaft fixiert werden. Die Führungsvorrichtung kann sich zumindest entlang eines Längsabschnitts, insbesondere entlang zumindest 50%, besonders bevorzugt entlang zumindest 90%, der Länge der Sägekette erstrecken.

Wenn im Verlauf der Beschreibung auf Orts- und Richtungsangaben wie "oben", "unten, "vorne", "hinten" oder "seitlich" Bezug genommen wird, so beziehen sich diese Angaben auf einen bestimmungsgemäßen Verwendungszustand des Fräskörpers, in welchem dieser in ein Stück Holz eingreift. Der Begriff "vertikal" bedeutet in Richtung der Schwerkraft, von "oben" nach "unten", oder umgekehrt. Wenn der Fräskörper in einer abweichenden Lage verwendet werden soll, sind die Orts- und Richtungsangaben entsprechend zu übertragen.

Gemäß einer bevorzugten Ausführungsform der Erfindung ist als Führungsvorrichtung in der Mantelfläche eine Rille ausgebildet, in welcher die Kettenglieder zumindest teilweise aufgenommen sind. Somit kann die Position der Sägekette durch die Rille vorgegeben sein und die Sägekette kann durch die Rille in zumindest einer Richtung festgehalten werden. Die Sägekette kann insbesondere in Bezug auf die Rille positionsfest oder entlang der Rille verschiebbar in der Rille aufgenommen sein. Beispielsweise können die Kettenglieder einen Fortsatz aufweisen, welcher in der Rille aufgenommen ist.

Insbesondere wenn die Erstreckung des Drehkörpers in Längsrichtung der Drehachse zumindest das zweifache der Breite der Sägekette beträgt, kann vorgesehen sein, dass die Sägekette wendelförmig um die Drehachse verlaufend über die Führungsvorrichtung auf der Mantelfläche geführt ist und insbesondere die Rille wendelförmig ausgebildet ist. Allgemein kann auch die Führungsvorrichtung wendelförmig um die Drehachse verlaufend ausgebildet sein. Der wendelförmige Verlauf erfordert zumindest eine halbe Umdrehung um die Drehachse, bevorzugt aber mindestens eine Umdrehung um die Drehachse. Der wendelförmige Verlauf der Sägekette gewährleistet zumindest abschnittsweise einen durchgehenden, d.h. lückenlosen Fräsvorgang zwischen den Enden der Sägekette, wobei zu jedem Zeitpunkt während der Rotation des Drehkörpers zumindest ein Sägezahn der Sägekette in den abzufräsenden Holzteil, beispielsweise Aststummel, eingreifen kann.

Wenn die Führungsvorrichtung, insbesondere die Rille, eine im Wesentlichen konstante Steigung aufweist, kann der Drehkörper besonders kostengünstig und leicht, beispielsweise aus Kunststoff, gefertigt werden. Zudem kann hierdurch eine gleich große Fräsleistung, d.h. ein gleich großer Materialabtrag pro Zeiteinheit, entlang der Drehachse ermöglicht werden. Als Steigung der Führungsvorrichtung, insbesondere Rille, ist der Weg zu verstehen, den die Führungsvorrichtung oder Rille mit genau einer Umdrehung in Richtung der Drehachse zurücklegt.

Vorzugsweise liegt die Steigung der Führungsvorrichtung, insbesondere der Rille, im Bereich vom 1,2 fachen bis 2 fachen der Breite der Sägekette. Eine solche konstante oder variierende Steigung ermöglicht ein Auslenken der auf der Mantelfläche wendelförmig um die Drehachse angeordneten Sägekette in Längsrichtung der Drehachse mit im Handel erhältlichen Sägeketten für Kettensägen. Auf spezielle Sägeketten mit Gelenken für größere Auslenkungen in seitliche Richtung, d.h. in Längsrichtung der Drehachse, kann daher verzichtet werden. Zudem ermöglicht die Steigung im genannten Bereich einen effizienten Materialabtrag.

Bevorzugt weist der Drehkörper zwei voneinander abgewandte und voneinander beabstandete Stirnseiten auf, zwischen welchen die Mantelfläche angeordnet ist. Die voneinander abgewandten, bzw. einander gegenüberliegenden, und voneinander beabstandeten Stirnseiten können teilweise offen ausgebildet sein und beispielsweise Öffnungen aufweisen, welche ein äußeres Ende einer Aufnahme für die Drehwelle bilden. Bevorzugt sind die Stirnseiten mit einem kreisrunden Umfang ausgebildet. Zwischen den Stirnseiten ist die Mantelfläche vorgesehen, welche die Sägekette trägt. An den Stirnseiten können weitere Komponenten des Fräskörpers montiert sein.

Wenn sich die Führungsvorrichtung, insbesondere die Rille, in einem Längsschnitt betrachtet entlang zumindest 50 %, bevorzugt zumindest 70 %, besonders bevorzugt zumindest 90 % des Abstands zwischen den beiden Stirnseiten in Richtung der Drehachse erstreckt und insbesondere die Führungsvorrichtung, insbesondere Rille, an einer der Stirnseiten beginnt und an der anderen Stirnseite endet, kann die Sägekette besonders zuverlässig durch die Führungsvorrichtung, insbesondere Rille, geführt werden. Zudem ermöglicht eine derart breite Anordnung der Führungsvorrichtung, insbesondere Rille, und insbesondere der darin aufgenommenen Sägekette, eine entsprechend breite Fräsfläche. Wenn die Führungsvorrichtung oder Rille an einer der Stirnseiten beginnt und an der anderen Stirnseite endet, kann die Sägekette auf einfache Weise an den Stirnseiten befestigt werden.

Weiters kann vorgesehen sein, dass die Mantelfläche nach innen zu der Drehachse hin oder nach außen von der Drehachse weg gewölbt ist und insbesondere der Drehkörper ein Walzenkörper ist. Die zwischen den Stirnseiten vorgesehene Mantelfläche kann somit nach innen zu der Drehachse hin / nach außen von der Drehachse weg gewölbt sein oder, wenn der Drehkörper eine Drehwelle aufweist oder damit verbunden ist, insbesondere nach innen zu der mit der Drehachse zusammenfallenden Drehwelle hin / von der Drehwelle weg gewölbt sein. Die Wölbung der Mantelfläche kann die Form eines Abschnitts eines Kreisumfangs oder eines Abschnitts eines Umfangs einer Ellipse aufweisen. Die Form der Wölbung kann abhängig von der Form des zu fräsenden Stücks Holz geeignet festgelegt sein.

Um die Sägezähne in eine gleiche Richtung zu orientieren, ist es vorteilhaft, wenn in einem Zustand mit horizontaler Drehachse die gewölbte Mantelfläche in einem Längsschnitt betrachtet eine stufenförmige Kontur mit horizontalen Stufenflächen und vertikalen Stufenflächen aufweist, und die Rille in den horizontalen Stufenflächen ausgebildet ist. Vorzugsweise sind hierdurch alle in der Rille aufgenommenen Sägezähne in einem rechten Winkel in Bezug auf die Längserstreckung der Drehachse angeordnet. Somit können die Sägezähne in ihrer bestimmungsgemäßen Ausrichtung in das zu fräsende Stück Holz eingreifen. Zudem wirkt hierdurch eine beim Fräsen auftretende Kraft auf die Sägezähne in Richtung der Rille und der Drehachse, wodurch ein Verkippen der Sägezähne in der Rille verhindert wird. Unter dem genannten Längsschnitt wird ein Schnitt mit einer Ebene verstanden, in welcher die Drehachse verläuft.

Gemäß einer weiteren Ausführungsform kann eine mit dem Drehkörper verbundene Spannvorrichtung vorgesehen sein, welche mit der Sägekette verbunden ist. Mittels der Spannvorrichtung kann die auf der Mantelfläche angeordnete Sägekette gespannt werden und in einem gespannten Zustand gehalten werden, wodurch Bewegungen der Sägekette, welche im Betrieb des Fräskörpers Schäden an der Sägekette selbst oder am Drehkörper verursachen könnten, vermieden werden. Die Sägekette wird beim Spannen insbesondere einer Zugbeanspruchung ausgesetzt.

Bevorzugt weist die Spannvorrichtung zumindest einen um eine Schwenkachse verschwenkbaren Spannhebel mit zwei Hebelenden beiderseits der Schwenkachse auf, wobei ein Hebelende mit der Sägekette in Eingriff steht und das andere Hebelende mit einem Verstellelement, insbesondere mit einer Spannschraube, in Eingriff steht. Im Fall von zwei Spannhebeln kann ein Hebelende von jedem der Spannhebel mit der Sägekette in Eingriff stehen und das andere Hebelende von jedem der Spannhebel mit einem von zwei Verstellelementen in Eingriff stehen. Wenn das zumindest eine Verstellelement betätigt wird, beispielsweise die Spannschraube gedreht wird, kann hierdurch der Spannhebel um seine Schwenkachse verschwenkt werden, wodurch auch das mit der Sägekette verbundene Hebelende verschwenkt wird und die Sägekette gespannt oder entspannt wird. Die verstellbare Spannschraube kann beispielsweise in eine ein Innengewinde aufweisende und mit dem Drehkörper verbundene Durchgangsöffnung eingeschraubt sein.

Für eine besonders stabile Konstruktion des Fräskörpers kann vorgesehen sein, dass an zumindest einer der Stirnseiten, bevorzugt an beiden Stirnseiten des Drehkörpers eine vorzugsweise ringförmige Außenwand montiert ist. Die Außenwand kann aus Kunststoff oder Metall gebildet sein und verhindert bevorzugt einen Bruch des Drehkörpers, insbesondere der Stirnseiten, selbst im Falle hoher mechanischer Beanspruchung des Fräskörpers. Die Außenwand kann zerstörungsfrei lösbar oder dauerhaft mit der Stirnseite verbunden sein, beispielsweise mit der Stirnseite verklebt oder auf die Stirnseite aufgeschnappt oder mit der Stirnseite verschraubt sein. Wenn die Außenwand ringförmig ausgebildet ist, kann durch die Ringöffnung der Außenwand hindurch eine Drehwelle eingesetzt werden.

Für eine besonders stabile Konstruktion des Fräskörpers kann weiters vorgesehen sein, dass der zumindest eine Spannhebel der Spannvorrichtung und vorzugsweise auch das Verstellelement, insbesondere die Spannschraube, an der zumindest einen ringförmigen Außenwand montiert ist. Auf diese Weise wird die Stirnseite des Drehkörpers durch die auf den Spannhebel und auf das Verstellelement wirkenden Kräfte während des Spannens der Sägekette und im gespannten Zustand der Sägekette nicht oder nur geringfügig belastet.

Die Erfindung wird nachstehend anhand von bevorzugten Ausführungsbeispielen, auf welche sie jedoch nicht beschränkt sein soll, noch weiter erläutert. In den Zeichnungen zeigen:
Fig. 1 einen Abschnitt eines Fräskörpers, welcher als Fräswalze ausgebildet ist, ohne ringförmige Außenwand, in einer perspektivischen Ansicht, mit einer nur abschnittsweise dargestellten Sägekette;
Fig. 2 einen Fräskörper, welcher als Fräswalze ausgebildet ist, mit ringförmigen Außenwänden, in einer Seitenansicht mit Blick auf eine der Außenwände, mit einem Spannhebel der Spannvorrichtung in einer ersten Position;
Fig. 3 die Fräswalze aus Fig. 2 in einer Vorderansicht, mit einer nur abschnittsweise dargestellten Sägekette;
Fig. 4 die Fräswalze aus Fig. 3 in einer Schnittansicht entlang der Schnittlinie A-A;
Fig. 5 eine vergrößerte Darstellung des Details C aus Fig. 4;
Fig. 6 die Fräswalze mit ringförmigen Außenwänden, in einer Seitenansicht mit Blick auf eine der Außenwände, mit dem Spannhebel in einer im Vergleich zur Darstellung in Fig. 2 unterschiedlichen zweiten Position;
Fig. 7 einen Schnitt durch die in Fig. 6 dargestellte Spannvorrichtung entlang der Schnittlinie D-D;
Fig. 8 eine vergrößerte Darstellung des Details E aus Fig. 7;
Fig. 9 einen Abschnitt einer Innenansicht auf eine der Außenwände, ohne die Sägekette;
Fig. 10 den Abschnitt der Innenansicht auf eine der Außenwände gemäß Fig. 9, mit der Sägekette;
Fig. 11 einen Fräskörper welcher eine Scheibe als Drehkörper mit einer Sägekette am Umfangsrand der Scheibe aufweist, in einer vereinfachten Darstellung;
Fig. 12 einen Fräskörper welcher einen walzenförmigen Drehkörper mit zylindrische Mantelfläche und mit einer Sägekette darauf aufweist, in einer vereinfachten Darstellung;
Fig. 13 einen Fräskörper welcher einen walzenförmigen Drehkörper mit einer nach außen gewölbten Mantelfläche und mit einer Sägekette darauf aufweist, in einer vereinfachten Darstellung; und
Fig. 14 einen Fräskörper welcher einen walzenförmigen Drehkörper mit einer kegelstumpfförmigen Mantelfläche und mit einer Sägekette darauf aufweist, in einer vereinfachten Darstellung.

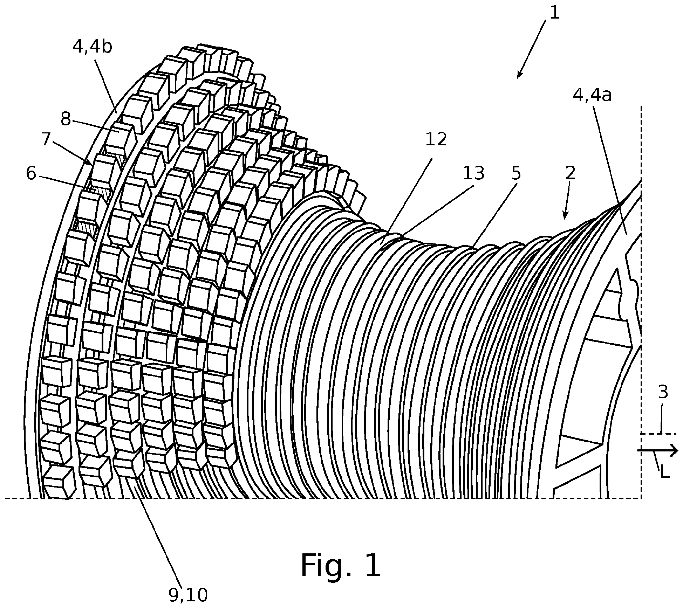

Es sei darauf hingewiesen, dass die Figuren 1 bis 14 nicht notwendigerweise maßstabsgetreu dargestellt sind.

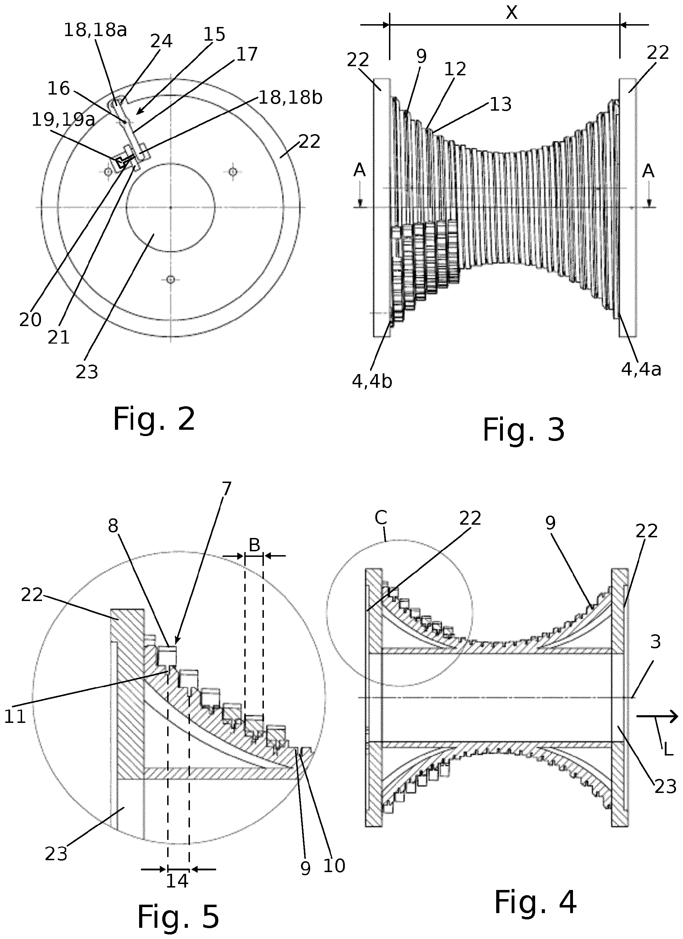

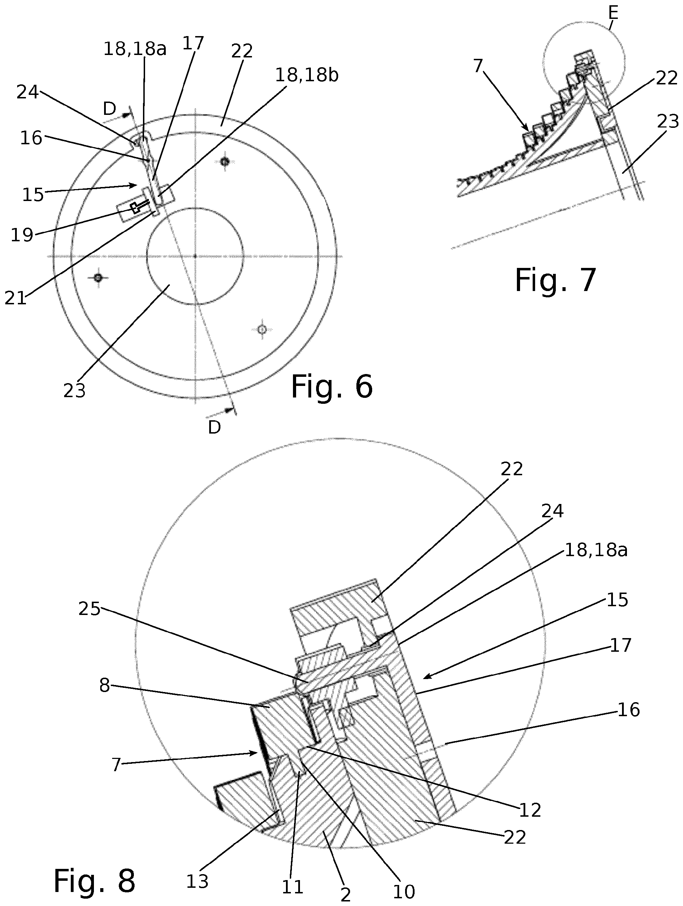

Fig. 1 zeigt einen Teil eines Fräskörpers 1, welcher beispielhaft als eine Fräswalze ausgebildet ist, zum Fräsen von Holz, beispielsweise von nicht dargestellten Aststummeln oder anderen Teilen eines Baumstamms. Der Fräskörper 1 weist einen Drehkörper 2 auf, welchem eine Drehachse 3 (siehe auch Fig. 4) zugeordnet ist. Der Drehkörper 2 weist zudem eine um die Drehachse 3 verlaufende Mantelfläche 5 auf. Der Drehkörper 2 weist im dargestellten Beispiel auch zwei voneinander abgewandte und voneinander beabstandete Stirnseiten 4, 4a, 4b auf, zwischen welchen die Mantelfläche 5, im dargestellten Beispiel eine insbesondere nach innen zu der Drehachse 3 hin gewölbte Mantelfläche 5, angeordnet ist. Auf der Mantelfläche 5 ist eine um die Drehachse 3 verlaufende Sägekette 6 angeordnet, die eine Vielzahl von miteinander verbundenen Kettengliedern 7 mit Sägezähnen 8 aufweist. Beispielsweise ist die Sägekette 6 mit wendelförmigem Verlauf auf der Mantelfläche 5 angeordnet. In Fig. 1 ist die Sägekette 6 nur abschnittsweise dargestellt und die Kettenglieder 7 sind nur in einem kleinen Abschnitt miteinander verbunden dargestellt, um im größeren Abschnitt den Blick auf die darunter liegende Mantelfläche 5 freizugeben. Selbstverständlich sind jedoch alle Kettenglieder 7 der Sägekette 6 miteinander verbunden. Die Mantelfläche 5 weist eine Führungsvorrichtung 9 auf, siehe beispielsweise die Figuren 1, 3, 4 und 5, über welche die Sägekette 6 auf der Mantelfläche 5 geführt ist. Insbesondere ist die Führungsvorrichtung 9 als eine Rille 10 in der Mantelfläche 5 ausgebildet, in welcher Rille 10 die Kettenglieder 7 zumindest teilweise aufgenommen sind und geführt sind. Hierfür kann ein Fortsatz 11 der Kettenglieder 7 in der Rille 10 aufgenommen sein, vgl. Fig. 5 und 8. Mittels der Führungsvorrichtung 9, insbesondere Rille 10, ist die Sägekette 6 vor einem seitlichen Abrutschen in axialer Richtung der Drehachse 3, d.h. in Längsrichtung L der Drehachse 3, geschützt. Die Kettenglieder 7 liegen bevorzugt, beiderseits der Rille 10, auf der Mantelfläche 5 auf, um die beim Fräsen von Holz auftretenden Kräfte möglichst großflächig auf die Mantelfläche 5 übertragen zu können. Die Tiefe der Rille 10 kann beispielsweise 2 mm bis 10 mm betragen und die Breite der Rille 10 kann beispielsweise 1 mm bis 5 mm betragen.

Insbesondere die Fig. 1 und 3 zeigen, dass die Sägekette 6 wendelförmig um die Drehachse 3 verlaufend über die Führungsvorrichtung 9 auf der Mantelfläche 5 geführt ist und insbesondere die Rille 10 wendelförmig ausgebildet ist.

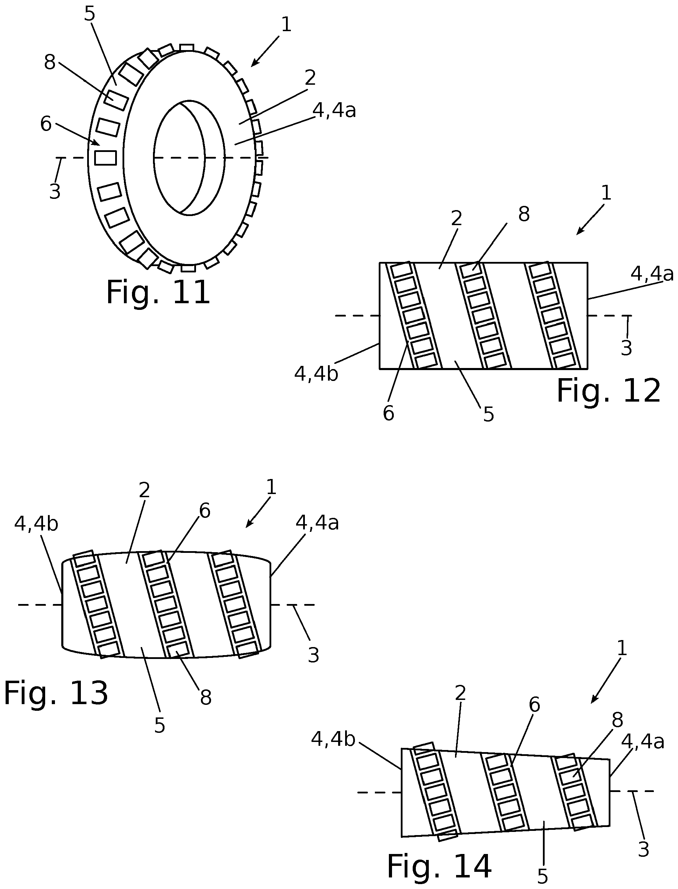

In den Fig. 1, 3 bis 5, 7 und 8 ist der als Walzenkörper oder Walze ausgebildete Drehkörper 2 mit einer Mantelfläche 5 dargestellt, welche nach innen zu der Drehachse 3 hin gewölbt ist. Im Beispiel gemäß Fig. 13 hingegen ist der als Walzenkörper oder Walze ausgebildete Drehkörper 2 mit einer Mantelfläche 5 dargestellt, welche nach außen von der Drehachse 3 weg gewölbt ist.

Unter anderem die Fig. 1 und 3 zeigen den Drehkörper 2 mit einer horizontal angeordneten Drehachse 3. Zu erkennen ist, dass in diesem Zustand mit horizontaler Drehachse 3 die gewölbte Mantelfläche 5 in einem Längsschnitt betrachtet eine stufenförmige Kontur mit horizontalen Stufenflächen 12 und vertikalen Stufenflächen 13 aufweist, und die Rille 10 in den horizontalen Stufenflächen 12 ausgebildet ist, siehe auch Fig. 8. Obgleich in den Figuren 1 bis 10 kein Längsschnitt der gewölbten Mantelfläche 5 mit einer vertikalen Ebene dargestellt ist, ist die stufenförmige Kontur mit horizontalen Stufenflächen 12 und vertikalen Stufenflächen 13 einfach anhand der Fig. 1 und 3 nachvollziehbar. Da die Rille 10 in den horizontalen Stufenflächen 12 ausgebildet ist, kann die Sägekette 6 vor einem seitlichen Verkippen, welches andernfalls durch die beim Fräsen von Holz wirkenden Kräfte auftreten könnte, bewahrt werden.

Insbesondere den Fig. 3, 4 und 5 ist deutlich entnehmbar, dass die Führungsvorrichtung 9, insbesondere die Rille 10, zumindest entlang eines axialen Teilstücks zwischen den Stirnseiten 4, eine im Wesentlichen konstante Steigung 14 aufweist. Bevorzugt liegt die Steigung 14 der Führungsvorrichtung 9, insbesondere der Rille 10, im Bereich vom 1,2 fachen bis 2 fachen der Breite B der Sägekette 6, insbesondere der Kettenglieder 7.

Besonders bevorzugt ist, dass sich die Führungsvorrichtung 9, insbesondere die Rille 10, in einem Längsschnitt des Drehkörpers 2 betrachtet, entlang zumindest 50 %, bevorzugt zumindest 70 %, besonders bevorzugt zumindest 90 % des Abstands X zwischen den beiden Stirnseiten 4 in Richtung der Drehachse 3 erstreckt. In den Darstellungen gemäß Fig. 1, 3, und 4 beginnt die Führungsvorrichtung 9, insbesondere Rille 10, an einer der Stirnseiten 4, 4a und endet an der anderen Stirnseite 4, 4b.

Die Fig. 2 und 6 bis 10 zeigen jeweils einen Teil einer mit dem Drehkörper 2 verbundenen Spannvorrichtung 15, welche mit der Sägekette 6 verbunden ist. Die Spannvorrichtung 15 dient dem Spannen der Sägekette 6. Die Fig. 2 und 6 zeigen deutlich, dass die Spannvorrichtung 15 zumindest einen um eine Schwenkachse 16 verschwenkbaren Spannhebel 17 mit zwei Hebelenden 18, 18a, 18b beiderseits der Schwenkachse 16 aufweist. In den Fig. 2 und 6 ist jeweils nur ein Spannhebel 17 sichtbar. Eines der Hebelenden 18, 18a steht dabei mit der Sägekette 6, insbesondere mit einem Kettenglied 7, in Eingriff, siehe Fig. 8. Das andere der Hebelenden 18, 18b steht mit einem Verstellelement 19, insbesondere mit einer nur symbolisch dargestellten Spannschraube 19a, in Eingriff. Die Spannschraube 19a ist im Beispiel gemäß Fig. 2 in eine mit Innengewinde versehene Durchgangsöffnung 20 eines Stegs 21 der Spannvorrichtung 15 eingeschraubt. Im Beispiel gemäß Fig. 6 wurde der Spannhebel 17 durch Drehen der Spannschraube 19a im Vergleich zum Beispiel gemäß Fig. 2 verschwenkt.

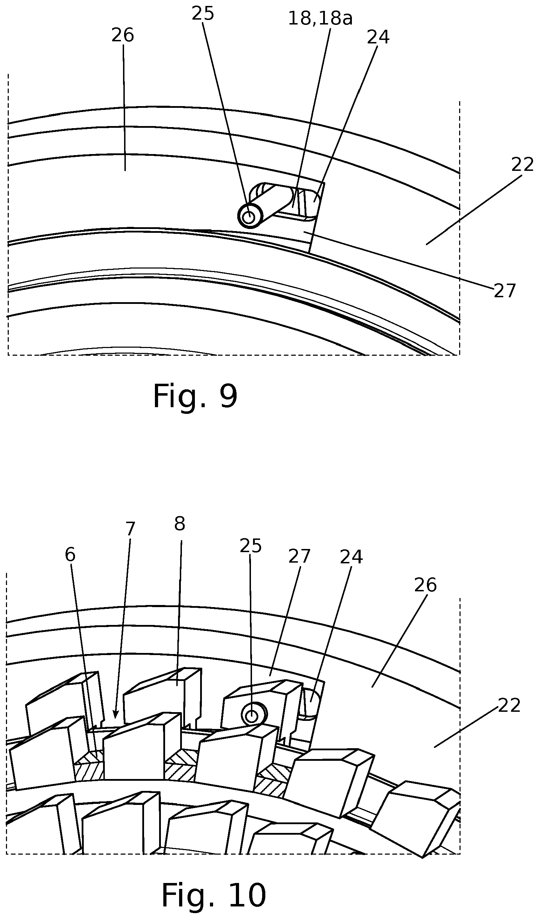

Während Fig. 1 den Fräskörper 1 ohne eine mit den Stirnseiten 4 verbundene Außenwand zeigt, ist in den Beispielen gemäß den Fig. 2 bis 10 an zumindest einer der Stirnseiten 4, bevorzugt an beiden Stirnseiten 4 des Drehkörpers 2, eine vorzugsweise ringförmige Außenwand 22 montiert. Die Außenwand 22 dient der Verstärkung des Fräskörpers 1 und weist bevorzugt eine zentrale Öffnung 23 auf, durch welche eine nicht dargestellte Drehwelle eingesetzt werden kann. Der zumindest eine Spannhebel 17 der Spannvorrichtung 15 und vorzugsweise auch das Verstellelement 19, insbesondere die Spannschraube 19a, sind an der zumindest einen ringförmigen Außenwand 22 montiert. Die Außenwand 22 weist beispielsweise zudem eine Wandöffnung 24 auf, durch welche ein Zapfen 25 hindurchragt, welcher an dem mit der Sägekette 6 verbundenen Hebelende 18, 18a angeordnet ist. Der Zapfen 25 greift bevorzugt in die Sägekette 6, insbesondere in ein Kettenglied 7 oder einen Sägezahn 8 ein, siehe insbesondere Fig. 8 und 10. Mittels des Zapfens 25 kann somit die Kraft vom Spannhebel 17 auf die Sägekette 6 übertragen werden.

Fig. 9 zeigt eine Innenansicht eines Abschnitts der ringförmigen Außenwand 22, mit dem durch die Wandöffnung 24 ragenden Zapfen 25 am Hebelende 18, 18a, wobei der Übersichtlichkeit wegen die Sägekette 6 nicht dargestellt ist. In Fig. 10 ist die Sägekette 6 im Vergleich zu Fig. 9 dargestellt. Die Innenseite 26 der Ausßenwand 22 kann im Bereich der Wandöffnung 24 eine rampenförmige Vertiefung 27 aufweisen, deren Tiefe sich in Längsrichtung der Sägekette 6 kontinuierlich verringert. Auf diese Weise kann die Sägekette 6 von der Wandöffnung 24 ausgehend kontinuierlich aus der Außenwand 22 heraus auf die Mantelfläche 5 geführt werden.

In den Fig. 1 und 10 sind der Übersichtlichkeit wegen benachbarte Kettenglieder 7 bzw. Sägezähne 8 nur in einem kleinen Abschnitt miteinander verbunden dargestellt, siehe die schraffieren Verbindungselemente. Die Sägekette 6 ist zudem in den Fig. 1, 3 bis 5, 7, 8 und 10 bis 14 nur vereinfacht, z.B. ohne die Kettenglieder 7 verbindende Gelenke, dargestellt.

Fig. 11 zeigt symbolisch ein Beispiel eines Drehkörpers 2, welcher als eine Scheibe ausgebildet ist, wobei am Umfangsrand der Scheibe, welcher die Mantelfläche 5 bildet, die Sägekette 6 angeordnet ist. Die Sägekette 6 verläuft in diesem Beispiel nicht wendelförmig, d.h. ohne Steigung, um die Drehachse 3.

Fig. 12 zeigt symbolisch ein Beispiel eines Drehkörpers 2, welcher als Walze mit zylindrischer Mantelfläche 5 ausgebildet ist. Die auf der Mantelfläche 5 angeordnete Sägekette 6 verläuft wendelförmig um die Drehachse 3.

Fig. 13 zeigt symbolisch ein Beispiel eines Drehkörpers 2, welcher als Walze mit nach außen von der Drehachse 3 weg gewölbter Mantelfläche 5 ausgebildet ist. Die auf der Mantelfläche 5 angeordnete Sägekette 6 verläuft wendelförmig um die Drehachse 3.

Fig. 14 zeigt symbolisch ein Beispiel eines Drehkörpers 2, welcher als Walze mit kegelstumpfförmiger Mantelfläche 5 ausgebildet ist, d.h. der Durchmesser des Drehkörpers 2 nimmt in Längsrichtung L der Drehachse 3 ab. Die auf der Mantelfläche 5 angeordnete Sägekette 6 verläuft wendelförmig um die Drehachse 3.

Der als Walze ausgebildete Drehkörper 2 kann beispielsweise eine Länge in Richtung der Drehachse 3 im Bereich von 5 cm bis 40 cm, einen größten Durchmesser im Bereich von 10 cm bis 20 cm und einen kleinsten Durchmesser im Bereich von 5 cm bis 15 cm aufweisen.

Der Abstand benachbarter, entlang der Sägekette 6 hintereinander angeordneter Sägezähne 8 kann beispielsweise 1 mm bis 5 mm betragen.

In einer nicht dargestellten Ausführungsform kann der Drehkörper 2 auch ohne ebene Stirnseiten 4, 4a, 4b, beispielsweise als Kugel, Rotationsellipsoid, oder allgemein mit gekrümmten von der Drechachse 3 ausgehenden Endflächen ausgebildet sein.

Der Fräskörper 1 kann auf der Mantelfläche 5 auch mehr als eine einzige Sägekette 6, beispielsweise zwei oder drei Sägeketten 6, aufweisen.

## Patentansprüche

**1.** Fräskörper (1) zum Fräsen von Holz, mit einem Drehkörper (2), welchem eine Drehachse (3) zugeordnet ist und welcher eine um die Drehachse (3) verlaufende Mantelfläche (5) aufweist, **dadurch gekennzeichnet, dass** auf der Mantelfläche (5) eine um die Drehachse (3) verlaufende Sägekette (6) angeordnet ist, die eine Vielzahl von Kettengliedern (7) mit Sägezähnen (8) aufweist, wobei die Mantelfläche (5) eine Führungsvorrichtung (9) aufweist, über welche die Sägekette (6) auf der Mantelfläche (5) geführt ist.

**2.** Fräskörper (1) nach Anspruch 1, **dadurch gekennzeichnet, dass** als Führungsvorrichtung (9) in der Mantelfläche (5) eine Rille (10) ausgebildet ist, in welcher die Kettenglieder (7) zumindest teilweise aufgenommen sind.

**3.** Fräskörper (1) nach Anspruch 1 oder 2, **dadurch gekennzeichnet, dass** die Sägekette (6) wendelförmig um die Drehachse (3) verlaufend über die Führungsvorrichtung (9) auf der Mantelfläche (5) geführt ist und insbesondere die Rille (10) wendelförmig ausgebildet ist.

**4.** Fräskörper (1) nach Anspruch 3, **dadurch gekennzeichnet, dass** die Führungsvorrichtung (9), insbesondere die Rille (10), eine im Wesentlichen konstante Steigung (14) aufweist.

**5.** Fräskörper (1) nach Anspruch 3 oder 4, **dadurch gekennzeichnet, dass** die Steigung (14) der Führungsvorrichtung (9), insbesondere der Rille (10), im Bereich vom 1,2 fachen bis 2 fachen der Breite (B) der Sägekette (6) liegt.

**6.** Fräskörper (1) nach einem der Ansprüche 1 bis 5, **dadurch gekennzeichnet, dass** der Drehkörper (2) zwei voneinander abgewandte und voneinander beabstandete Stirnseiten (4, 4a, 4b) aufweist, zwischen welchen die Mantelfläche (5) angeordnet ist.

**7.** Fräskörper (1) nach Anspruch 6, **dadurch gekennzeichnet, dass** sich die Führungsvorrichtung (9), insbesondere die Rille (10), in einem Längsschnitt betrachtet entlang zumindest 50 %, bevorzugt zumindest 70 %, besonders bevorzugt zumindest 90 % des Abstands (X) zwischen den beiden Stirnseiten (4, 4a, 4b) in Richtung der Drehachse (3) erstreckt und insbesondere die Führungsvorrichtung (9), insbesondere Rille (10), an einer der Stirnseiten (4, 4a, 4b) beginnt und an der anderen Stirnseite (4, 4a, 4b) endet.

**8.** Fräskörper (1) nach einem der Ansprüche 1 bis 7, **dadurch gekennzeichnet, dass** die Mantelfläche (5) nach innen zu der Drehachse (3) hin oder nach außen von der Drehachse (3) weg gewölbt ist und insbesondere der Drehkörper (2) ein Walzenkörper ist.

**9.** Fräskörper (1) nach Anspruch 2 und 8, **dadurch gekennzeichnet, dass** in einem Zustand mit horizontaler Drehachse (3) die gewölbte Mantelfläche in einem Längsschnitt betrachtet eine stufenförmige Kontur mit horizontalen Stufenflächen (12) und vertikalen Stufenflächen (13) aufweist, und die Rille (10) in den horizontalen Stufenflächen (12) ausgebildet ist.

**10.** Fräskörper (1) nach einem der Ansprüche 1 bis 9, **dadurch gekennzeichnet, dass** eine mit dem Drehkörper (2) verbundene Spannvorrichtung (15) vorgesehen ist, welche mit der Sägekette (6) verbunden ist.

**11.** Fräskörper (1) nach Anspruch 10, **dadurch gekennzeichnet, dass** die Spannvorrichtung (15) zumindest einen um eine Schwenkachse (16) verschwenkbaren Spannhebel (17) mit zwei Hebelenden (18, 18a, 18b) beiderseits der Schwenkachse (16) aufweist, wobei ein Hebelende (18, 18a) mit der Sägekette (6) in Eingriff steht und das andere Hebelende (18, 18b) mit einem Verstellelement (19), insbesondere mit einer Spannschraube (19a), in Eingriff steht.

**12.** Fräskörper (1) nach Anspruch 6, **dadurch gekennzeichnet, dass** an zumindest einer der Stirnseiten (4, 4a, 4b), bevorzugt an beiden Stirnseiten (4, 4a, 4b) des Drehkörpers (2) eine vorzugsweise ringförmige Außenwand (22) montiert ist.

**14.** Fräskörper (1) nach Anspruch 11 und 12, **dadurch gekennzeichnet, dass** der zumindest eine Spannhebel (17) der Spannvorrichtung (15) und vorzugsweise auch das Verstellelement (19), insbesondere die Spannschraube (19a), an der zumindest einen ringförmigen Außenwand (22) montiert ist.
